# EUROPÄISCHE PATENTANMELDUNG

(11) **EP 1 867 538 A2**
(43) Veröffentlichungstag der Anmeldung: **19.12.2007**
(21) Anmeldenummer: 07005710.4
(22) Anmeldetag: 20.03.2007
(51) Int. Cl.: B60S 9/04

(54) **Sattelschlepper**

(30) Priorität: 15.06.2006 DE 102006028133
(71) Anmelder: Bermüller, Wolfgang, 81927 München (DE)
(72) Erfinder: Bermüller, Wolfgang, 81927 München (DE)
(74) Vertreter: Säger, Manfred

(57) **Zusammenfassung**

Ein Sattelschlepper (5) mit einem einen Sattelrahmen (52) aufweisenden Sattelauflager (6) zum Transport eines Sattelaufliegers (7) kennzeichnet sich dadurch aus, dass er mit zumindest einer an dessen Rahmen angebrachten, auf den Untergrund ausfahrbaren Stütze (9) zum Abstützen und zum Einstellen der Höhe des Sattelauflagers (6) sowie zum Stabilisieren der Lage des Sattelaufliegers (7) versehen ist, wobei die ausfahrbare Stütze (9) ein an dem Rahmen festgelegtes, senkrecht zu diesem angeordnetes Mittelteil (91) sowie je einen aus diesem nach oben sowie nach unten ausfahrbaren Zylinder (92,93) aufweist und wobei die Stütze im bei Kurvenfahrt sich ergebendem Überlappungsbereich (57,75) des Sattelrahmens (8) mit dem Rahmen des Sattelschleppers (5) angeordnet ist.

## Beschreibung

Die Erfindung betrifft einen gattungsgemässen Sattelschlepper gemäss dem Oberbegriff des Hauptanspruchs mit einem Rahmen und mit einem Sattelauflager zum Transport eines Sattelaufliegers.

Solche einen Sattelzug bildenden Sattelschlepper mit über das Sattelauflager aufliegendem Sattelauflieger sind bekannt und haben sich im wesentlichen bewährt.

Allerdings weist der Sattelschlepper wegen des sich bei Kurvenfahrt ergebenden Überlappungsbereiches des Sattelrahmens mit dem Rahmen des Sattelschleppers keine seitlichen nach oben hervorstehende Stützen auf. Diese müssen gegebenenfalls ausserhalb des Überlappungsbereiches des Rahmens des Sattelschleppers mit dem Sattelrahmen des Sattelaufliegers frontseitig an diesem angebracht werden. Ausschlieslich hierdurch bedingt wird der Sattelzug um bis zu vier Meter länger als eigentlich notwendig.

Der Erfindung liegt daher die Aufgabe zugrunde, einen Sattelzug kürzer bauend auszubilden.

Diese Aufgabe wird bei einem gattungsgemässen Sattelschlepper nach dem Oberbegriff des Hauptanspruchs erfindungsgemäss durch dessen kennzeichnende Merkmale, also dadurch gelöst, dass er mit zumindest einer an dessen Rahmen angebrachten, auf den Untergrund ausfahrbaren Stütze zum Abstützen und zum Einstellen der Höhe des Sattelauflagers sowie zum Stabilisieren der Lage des Sattelaufliegers versehen ist.

Die Stütze nimmt in ihrer ausgefahrenen Abstützlage das Gewicht der Befülleinrichtung auf und leitet die aufgenommene Last in den Untergrund. Wird die Stütze noch weiter ausgefahren, so wird das Sattelauflager angehoben, so dass damit dessen Höhe eingestellt und bei dem Auf- und Abladen des Transportgutes von dem Sattelauflieger stabilisiert werden kann.

Erfindungsgemäss können infolgedessen also auch die vorderen Stützen an dem Sattelauflieger entfallen und statt dessen an dem Sattelschlepper angebracht werden, was den Vorteil mit sich bringt, dass der Sattelzug um bis zu vier Meter kürzer baut, als es nach dem Stand der Technik möglich ist.

Hierbei weist die ausfahrbare Stütze mit Vorteil ein an dem Rahmen festgelegtes, senkrecht zu diesem angeordnetes Mittelteil sowie je einen aus diesem nach oben sowie nach unten ausfahrbaren Zylinder auf und ist die Stütze im bei Kurvenfahrt sich ergebendem Überlappungsbereich des Sattelrahmens des Sattelaufliegers mit dem Rahmen des Sattelschleppers angeordnet. Somit steht die Stütze in Fahrt des Sattelzuges nicht nach oben vor und ist daher kein Hindernis bei Kurvenfahrt des Sattelschleppers.

Ein noch stabilerer Stand des Sattelschleppers ergibt sich, wenn zwei bezüglich der Schlepperlängsachse symmetrisch seitlich angeordnete ausfahrbare Stützen vorgesehen sind und diese beiden Stützen aus einer Transportstellung in eine Abstützstellung bringbar sind, in der ihr Abstand voneinander grösser als in der Transportstellung bemessen ist.

Zweckmässigerweise ist dabei das Mittelteil der ausfahrbaren Stütze aus einer eingeklappten Transportstellung um eine parallel zu dem Mittelteil verlaufenden Drehachse in eine ausgeklappte Abstützstellung drehbar.

Weitere zweckmässige Ausgestaltungen und Weiterbildungen der Erfindung sind in den Unteransprüchen gekennzeichnet.

Ein Auführungsbeispiel der Erfindung wird nachfolgend unter Bezugnahme auf die Zeichnung näher erläutert. In dieser zeigt:
- Fig. 1: einen Sattelzug, in abgebrochener Darstellung
- Fig. 2: die Einzelheit II gemäss Figur 1 und
- Fig. 3: eine Ansicht III - III gemäss Figur 2.

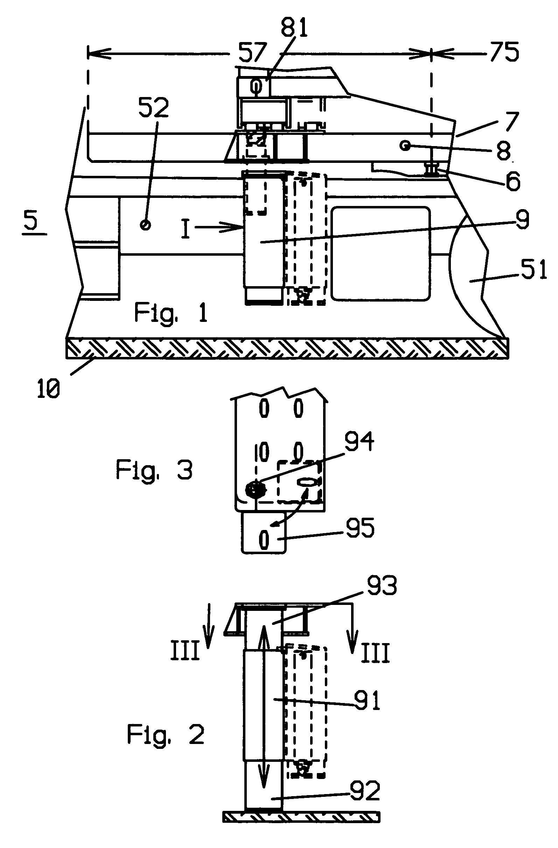

Figur 1 zeigt stark schematisiert einen Sattelzug, bestehend aus dem Heckbereich eines einen Rahmen 52 aufweisenden Sattelschleppers 5 mit seinem Hinterrad 51 über ein Sattelauflager 6 darauf aufliegendem Sattelauflieger 7 mit einem frontseitigem, auch Sattelhals genannten Sattelrahmen 8. Auf diesem ist ein Container 81 als Transportgut angedeutet.

Im bei Kurvenfahrt sich symmetrisch beiderseits des Sattelauflagers 6 ergebenden Überlappungsbereiches 57,75 des Sattelrahmens 8 des Sattelaufliegers 7 mit dem Sattelschlepper 5 ist seitlich an dessen Rahmen 52 eine bis auf den Untergrund 10 ausfahrbare Stütze 9 zum Abstützen und zum Einstellen der Höhe des Sattelauflagers 6 sowie zum Stabilisieren der Lage des Sattelaufliegers 7 angebracht, die in Figur 2 näher dargestellt ist. Von den zwei bezüglich der Schlepperlängsachse symmetrisch seitlich angeordneten ausfahrbaren Stützen 9 ist in Abstützstellung nur eine in Figur 1 dargestellt. Gestrichelt daneben ist eine Transportstellung gezeigt, in der ihr Abstand über die Breite des Sattelschleppers 5 voneinander grösser als in der Transportstellung bemessen ist.

Die Stütze 9 weist ein an dem Rahmen 52 festgelegtes, senkrecht zu diesem angeordnetes Mittelteil 91 sowie je einen aus diesem (91) nach oben sowie nach unten ausfahrbaren Zylinder 92,93 auf, wobei zunächst der untere Zylinder 92 bis zur Anlage an dem Untergrund 10 und dann erst der obere Zylinder 93 bis zur Anlage an dem in dem Überlappungsbereich 57 befindlichen frontseitigem Sattelrahmen 8 ausgefahren wird.

Das Mittelteil 91 der eingefahrenen Stütze 9 ist hierbei aus einer eingeklappten Transportstellung (gestrichelt) um eine parallel zu dem Mittelteil 91 verlaufenden Drehachse 94 (Figur 3) in die ausgeklappte Abstützstellung drehbar (Figur 2). Auf der Oberseite des oberen Zylinders 93 ist eine in Draufsicht rechteckförmige Platte 95 angeordnet.

## Patentansprüche

1. Sattelschlepper (5) mit einem Rahmen (52) und mit einem Sattelauflager (6) zum Transport eines Sattelaufliegers (7), **dadurch gekennzeichnet, dass** er mit zumindest einer an dessen Rahmen (52) angebrachten, auf den Untergrund ausfahrbaren Stütze (9) zum Abstützen und zum Einstellen der Höhe des Sattelauflagers (6) sowie zum Stabilisieren der Lage des Sattelaufliegers (7) versehen ist.

2. Sattelschlepper (5) nach Anspruch 1, **dadurch gekennzeichnet, dass** die ausfahrbare Stütze (9) ein an dem Rahmen (52) festgelegtes, senkrecht zu diesem angeordnetes Mittelteil (91) sowie je einen aus diesem nach oben sowie nach unten ausfahrbaren Zylinder (92,93) aufweist und dass die Stütze (9) im bei Kurvenfahrt sich ergebendem Überlappungsbereich (57,75) des Sattelrahmens (8) mit dem Rahmen (52) des Sattelschleppers (5) angeordnet ist.

3. Sattelschlepper (5) nach Anspruch 2, **dadurch gekennzeichnet, dass** zwei bezüglich der Schlepperlängsachse symmetrisch seitlich angeordnete ausfahrbare Stützen (9) vorgesehen sind und dass diese beiden Stützen (9) aus einer Transportstellung in eine Abstützstellung bringbar sind, in der ihr Abstand voneinander grösser als in der Transportstellung bemessen ist.

4. Sattelschlepper (5) nach Anspruch 3, **dadurch gekennzeichnet, dass** das Mittelteil (91) der ausfahrbaren eingefahrenen Stütze (9) aus einer eingeklappten Transportstellung um eine parallel zu dem Mittelteil verlaufenden Drehachse (94) in eine ausgeklappte Abstützstellung drehbar ist.

5. Sattelschlepper (5) nach einem der Ansprüche 1 bis 4, **dadurch gekennzeichnet, dass** der Sattelauflieger (7) mit zwei seitlichen Stützen (9) versehen ist.

6. Sattelschlepper (5) nach Anspruch 5, **dadurch gekennzeichnet, dass** die zwei seitlichen Stützen (9) im Bereich des Hecks angeordnet sind.
